# EUROPEAN PATENT SPECIFICATION

(11) **EP 4 090 918 B1**
(45) Date of publication and mention of the grant of the patent: **09.04.2025**
(21) Application number: 21700195.7
(22) Date of filing: 08.01.2021
(51) Int. Cl.: G01F 19/00, A47G 21/04

(54) **RECYCLABLE DOSING DEVICE**
WIEDERVERWENDBARE DOSIERVORRICHTUNG
DISPOSITIF DE DOSAGE RECYCLABLE

(30) Priority: 17.01.2020 EP 20152548
(43) Date of publication of application: 23.11.2022
(73) Proprietor: Société des Produits Nestlé S.A., 1800 Vevey (CH)
(72) Inventor: BARDE, Christophe, 1802 Corseaux (CH); TOVAR NUEZ, Miguel Daniel, 1100 Morges (CH); VISHTAL, Alexey, 1143 Apples (CH); RUEDA, Luis Fernando, 3110 Munsingen (CH); NIEDERREITER, Gerhard, 1800 Vevey (CH); SACLIER, Christian, 74000 Annecy (FR)
(74) Representative: Gagliardi, Tatiana
(86) International application number: PCT/EP2021/050217
(87) International publication number: WO 2021/144196

(56) References cited:
- WO-A1-2009/040173
- KR-U- 19990 015 264
- US-A1- 2016 370 218

## Description

The present invention relates generally to the field of recyclable dosing devices. In particular, the present invention relates to a blank for producing a recyclable dosing device, a recyclable dosing device and the use of a recyclable dosing device for dosing a material. The recyclable dosing device can be produced from a blank made from a single piece of essentially rectangular material by folding. Preferred embodiments of the present invention relate to biodegradable and/or compostable dosing devices.

Dosing devices for food and beverage powders are usually disposable and made from plastic. This has the advantage that no significant amount of weight is added, hygiene can easily be ensured and precise dosing is possible. While there can be great benefits derived from the use of plastics, which have a positive impact on the lives of people every day, there are also negative impacts that need consideration. US 2016/370218 A1 relates to a flat rectangular apparatus for measuring volume of a substance formulated in any or combination of a solid / a liquid / a semi-solid / a semi-liquid formulation. The apparatus has a surface with defined measurement folding lines configured to bend the apparatus according to determined by marking of measurements and create predetermined capacity to hold a substance. The apparatus is constructed of the material selected from the group consisting of polymer, silicon, flexible substrate.

Plastic waste is one of the great environmental challenges today. Despite the fact that many kinds of plastic are recyclable today, they often are not recycled and end up in the environment where they will remain for a long time, in particular if they are not - or only slowly - biodegradable. Plastics in the environment, for example in the oceans, are a threat to the environment and wildlife.

Accordingly, the European Parliament has recently approved a new law including a ban on single-use plastic items such as plates, cutlery, straws and cotton buds sticks in the European Union by 2021.

According to the World Health Organisation, plastic accounts for about 10% of all of the waste generated. Each year, at least 8 million tons of plastic end up in the oceans. In the last decade, more plastic was produced than in the last century with 50% of the plastic we use being single use or disposable.

To address this, great efforts are undertaken by the industry to improve recycling rates and to replace plastic solutions by non-plastic alternatives. Wood-based spoons, for example are readily available, however, they are relatively heavy and cannot be folded, which often is essential for packaging purposes. Also, paper-based spoon alternatives are available, for example from EcoTensil, however, they usually do not allow precise dosing.

KR200184337 describes a paper spoon for measuring detergent powder. Also, this dosing device does not allow precise dosing and is made from a blank with several incisions and notches, making it complicated to produce and to form into a paper spoon.

Precise dosing, however, is essential, for example for powdered food compositions. For example compositions to be reconstituted in a liquid, such as milk or water, need to be dosed precisely to ensure optimal taste, but also to ensure the optimal nutritional composition of the final product. This is essential, for example for compositions such as powdered infant formula or powdered nutritional compositions, e.g., for frail or hospitalized people.

Any reference to prior art documents in this specification is not to be considered an admission that such prior art is widely known or forms part of the common general knowledge in the field.

It would therefore be desirable to provide the art with a blank to produce a dosing device, a dosing device and a use of the dosing device that overcome at least some of these and/or other disadvantages of dosing devices of the prior art.

The objective of the present invention was it, hence, to improve or enrich the state of the art and in particular to provide the art with a blank that is made from a single piece of recyclable material for producing a dosing device by a simple folding step; a dosing device that can be obtained from that blank by folding and that allows precise dosing of, for example, food grade material; a use of that dosing device to dose a composition to be dosed; or to at least provide a useful alternative.

The inventors were surprised to see that the objective of the present invention could be achieved by the subject matter of the independent claims. The dependent claims further develop the idea of the present invention.

Accordingly, the present invention provides a blank for producing a dosing device by folding made from a single piece of material characterized in that the single piece of material is essentially rectangular, recyclable, and without incisions or notches. The present invention further provides a dosing device obtainable by folding the blank of the present invention. Further, the present invention provides a use of a dosing device in accordance with the present invention for dosing a composition to be dosed.

As used in this specification, the words "comprises", "comprising", and similar words, are not to be interpreted in an exclusive or exhaustive sense. In other words, they are intended to mean "including, but not limited to".

The present inventors have shown that, for example, with the dosing device obtained from the blank of the present invention it is possible to dose powdered compositions precisely; the blank for the dosing device of the present invention is essentially rectangular, simple to prepare and does not comprise any incisions or notches, which potentially might tear or might not empty completely; the dosing device of the present invention can be obtained from the blank of the present invention by a simple one-step folding process; and the folding step of the blank to form the dosing device can be easily reversed.

Hence, the present invention relates, for example, to a blank for producing a recyclable dosing device, a recyclable dosing device and the use of a recyclable dosing device for dosing a material. The recyclable dosing device can be produced from a blank made from a single piece of essentially rectangular material by folding. Preferred embodiments of the present invention relate to biodegradable and/or compostable dosing devices.

The invention relates to a blank for producing a dosing device by folding made from a single piece of material characterized in that the single piece of material is essentially rectangular, recyclable, and without incisions or notches, wherein the blank comprises a folding line (1) extending essentially from the middle of one shorter side of the rectangular recyclable material in parallel to the longer sides of the rectangular recyclable material to a star point (2) located in the middle between the longer sides of the rectangular recyclable material; two folding lines (3) and (4), each one extending from the star point (2) to one of two corners of the rectangular recyclable material that are closest to the star point (2) so that each one of the two corners is connected to the star point (2) by one of the folding lines (3) or (4); and two folding lines (5) and (6), each one extending from the star point (2) in an angle (α) to one of two longer sides of the rectangular recyclable material so that folding line (5) is extending to the longer side connected to the corner of the rectangular recyclable material that folding line (3) is connected to and folding line (6) is extending to the longer side connected to the corner of the rectangular recyclable material that folding line (4) is connected to and the angle (α) between the folding lines (1) and (5) or (1) and (6), respectively is smaller than the angle (β) between the folding lines (1) and (3) and (1) and (4), respectively.

In a further aspect, the invention relates to a dosing device obtainable by folding a blank made from a single piece of material characterized in that the single piece of material is essentially rectangular, recyclable, and without incisions or notches, wherein the blank comprises a folding line (1) extending essentially from the middle of one shorter side of the rectangular recyclable material in parallel to the longer sides of the rectangular recyclable material to a star point (2) located in the middle between the longer sides of the rectangular recyclable material; two folding lines (3) and (4), each one extending from the star point (2) to one of two corners of the rectangular recyclable material that are closest to the star point (2) so that each one of the two corners is connected to the star point (2) by one of the folding lines (3) or (4); and two folding lines (5) and (6), each one extending from the star point (2) in an angle (α) to one of two longer sides of the rectangular recyclable material so that folding line (5) is extending to the longer side connected to the corner of the rectangular recyclable material that folding line (3) is connected to and folding line (6) is extending to the longer side connected to the corner of the rectangular recyclable material that folding line (4) is connected to and the angle (α) between the folding lines (1) and (5) or (1) and (6), respectively is smaller than the angle (β) between the folding lines (1) and (3) and (1) and (4), respectively.

In yet another aspect, the present invention relates to the use of a dosing device obtainable by folding a blank made from a single piece of material characterized in that the single piece of material is essentially rectangular, recyclable, and without incisions or notches, wherein the blank comprises a folding line (1) extending essentially from the middle of one shorter side of the rectangular recyclable material in parallel to the longer sides of the rectangular recyclable material to a star point (2) located in the middle between the longer sides of the rectangular recyclable material; two folding lines (3) and (4), each one extending from the star point (2) to one of two corners of the rectangular recyclable material that are closest to the star point (2) so that each one of the two corners is connected to the star point (2) by one of the folding lines (3) or (4); and two folding lines (5) and (6), each one extending from the star point (2) in an angle (α) to one of two longer sides of the rectangular recyclable material so that folding line (5) is extending to the longer side connected to the corner of the rectangular recyclable material that folding line (3) is connected to and folding line (6) is extending to the longer side connected to the corner of the rectangular recyclable material that folding line (4) is connected to and the angle (α) between the folding lines (1) and (5) or (1) and (6), respectively is smaller than the angle (β) between the folding lines (1) and (3) and (1) and (4), respectively, for dosing a composition to be dosed.

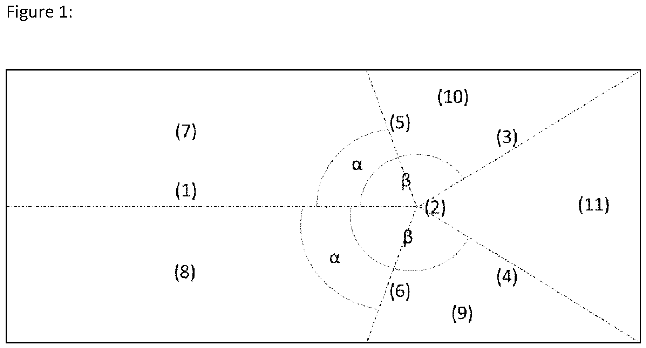

Figure 1 shows a scheme of a blank in accordance with the present invention with its folding lines (1), (3), (4), (5) and (6); angles (α) and (β); star point (2); and surfaces (7), (8), (9), (10), and (11).

Figure 2 shows a process to manufacture a blank and a dosing device in accordance with the present invention.

Consequently, the present invention relates in part to a blank for producing a dosing device by folding made from a single piece of material characterized in that the single piece of material is essentially rectangular, recyclable, and without incisions or notches, wherein the blank comprises a folding line (1) extending essentially from the middle of one shorter side of the rectangular recyclable material in parallel to the longer sides of the rectangular recyclable material to a star point (2) located in the middle between the longer sides of the rectangular recyclable material; two folding lines (3) and (4), each one extending from the star point (2) to one of two corners of the rectangular recyclable material that are closest to the star point (2) so that each one of the two corners is connected to the star point (2) by one of the folding lines (3) or (4); and two folding lines (5) and (6), each one extending from the star point (2) in an angle (α) to one of two longer sides of the rectangular recyclable material so that folding line (5) is extending to the longer side connected to the corner of the rectangular recyclable material that folding line (3) is connected to and folding line (6) is extending to the longer side connected to the corner of the rectangular recyclable material that folding line (4) is connected to and the angle (α) between the folding lines (1) and (5) or (1) and (6), respectively is smaller than the angle (β) between the folding lines (1) and (3) and (1) and (4), respectively.

The term "blank" as used herein refers to an essentially flat piece of material that has been pre-treated along the folding lines, for example by cutting, scoring, slotting, and/or folding and unfolding, so that it can be easily folded along the folding lines into a dosing device of the present invention.

The term "dosing device" as used herein refers to a device that can be used for dosing. For example, the dosing device of the present invention comprises a container member and a handle member. Typically, the dosing device of the present invention may have a spoon-like shape or a scoop-like shape.

The term "material" as used herein refers to a material that can be folded. Skilled artesian will be able to identify such material. For example, the "material" may be selected in accordance with the present invention from the group consisting of paper-based materials, cardboard-based materials, and/or composite materials. Typically, a material of the present invention can contain cellulose fibers. For example, the material of the present invention may be cardboard, paperboard, fiberboard or paper. The material of the present invention may be laminated cardboard, paperboard, fiberboard or paper or coated cardboard, paperboard, fiberboard or paper.

The material can be coated with a compound or a mixture of compounds. Suitable coatings are well-known to the skilled artesian. The coating can serve to impart certain qualities to the material, including weight, surface gloss, smoothness or reduced ink absorbency. For example, the material can be coated with wax, kaolinite, calcium carbonate, bentonite, talc, polyethylene, polyolefin, silicone, and biopolymers.

The term "folding line" as used herein includes creasing lines and refers to a line along which the blank is to be folded to form the dosing device.

The term "essentially rectangular" as used herein shall mean for the purposes of the present invention that the shape of the blank overall resembles a rectangular shape. "Rectangular" means a parallelogram having four right angles. "Essentially rectangular" may mean, for example, that each of the angles has a size in the range of 80 -100°, with the sum of the angles being 360°. In one embodiment of the present invention, the single piece of material is rectangular. This has the advantage; for example, that the blank can be produced from a sheet of material with no or very little waste being generated.

The blank of the present invention is recyclable. "Recyclable" means that the material can be treated or processed to make it suitable for reuse or a different use. This has the advantage, for example, that not only plastic waste is avoided, but also that by eliminating the need for conventional waste disposal energy usage can be reduced, greenhouse gas emission can be reduced, the consumption of fresh raw materials is reduced, and/or air pollution and water pollution (, e.g., from land filling) is reduced.

That the blank of the present invention is made from a single piece of material has several advantages. For example, this makes it very easy to produce as the blank of the present invention consists of only one part. No step of joining or separating several parts is required. Second a blank made from a single piece of material is much easier to package in a final product as blanks made from several parts. Hence, in one embodiment of the present invention the blank consists of one part.

The blank of the present invention is without incisions or notches. Producing incisions or notches typically requires extra manufacturing steps. Incisions or notches have the disadvantage, that they often represent a weak point in the blank where the blank can easily start tearing. They also frequently form cavities which do not empty completely. Hence, a blank without incisions or notches as the blank of the present invention overcomes these disadvantages.

In one embodiment of the present invention, the star point is located closer to the one shorter side of the rectangular than to the other shorter side of the rectangular. This has the advantage that the resulting handle member is longer than the container member, which makes the dosing device easier to hold. For example, the star point may be located between the two shorter sides of rectangular separating them in a length ratio of 0.8:2 - 1:2.2, for example 1:2, and in the middle between the two longer sides of the rectangular. Further, for example the star point may be located between the two shorter sides of rectangular separating them in a length ratio following the Fibonacci ratio. The resulting length relationship between handle member and container member will then be in accordance with the golden ratio, well known from several twentieth-century artists and architects, resulting in an arrangement which is both, easy to handle and optically pleasing.

In one embodiment of the present invention, the blank is to be folded by bringing the opposite surfaces located right and left of the folding line that extends essentially from the middle of one shorter side of the rectangular recyclable material in parallel to the longer sides of the rectangular recyclable material to a star point located in the middle between the longer sides of the rectangular recyclable material in close contact with one another. This will form the handle member and automatically will form the container member at the same time. In a preferred embodiment, the two surfaces that will form the handle member are brought into such close proximity to one another, that no composition to be dosed can fall between the two surfaces after they are brought into close proximity to one another.

Hence, in one embodiment of the present invention the blank is to be folded by bringing the surfaces (7) and (8) into close proximity to each other, for example by bringing the surfaces (7) and (8) into contact with one another.

For the purpose of the present invention, "bringing into close proximity" shall mean that that after the two sides are brought into close proximity with one another essentially no composition to be dosed can fall between the two surfaces. "Essentially no composition to be dosed" may mean, for example, that less than 1 weight-%, less than 0.5 weight-% or less than 0.1 weight-% of the composition to be dosed falls between the two surfaces after the container member is filled with the composition to be dosed. In one embodiment of the present invention, the blank is to be folded by bringing the surfaces (7) and (8) into contact with one another. If the surfaces (7) and (8) are brought into contact with one another, this may mean that no composition to be dosed falls between the two surfaces after the container member is filled with the composition to be dosed.

One advantage of the present invention is that the dosing device can be very easily produced from the blank in accordance with the present invention. The blank of the present invention allows it that the dosing device is formed from the blank simply by bringing the two surface that will form the holding member into contact with one another. Due to the remaining folding lines, the container member will form automatically when bringing the two surface that will form the holding member into contact with one another. Hence, in one embodiment of the present invention, the folding occurs in a single operation. "In a single operation" may mean, for example, that the folding can be a one-step procedure. Such a one-step procedure may not require that that the blank is laid down in the process of forming a dosing device.

Alternatively or additionally, "in a single operation" may mean that the folding can be carried out by one hand only.

For precise dosing it is advantageous, if the surfaces that form the handle member are brought into so close proximity to each other that essentially no composition to be dosed can fall between them during the dosing process. This can be achieved by using a hand to hold the two surfaces close together during operation. This has the advantage, that after the dosing process is completed the two surfaces can be released and the dosing device will transform back automatically into the blank of the present invention.

Alternatively, the surfaces that form the handle member can be attached to one another by means of an attachment means. Attachment means suitable for this purpose are well known to the skilled artesian and include, for example, attachment means that lead to a permanent attachment and attachment means that lead to a reversible attachment. An attachment means leading to a reversible attachment may be a paper clip or a restickable glue, for example.

The use of an attachment means has the advantages that the surfaces forming the handle member will be held together by the attachment means. Hence, possible errors during the dosing process resulting from leaving too much space between the surfaces that form the handle member can be avoided. A further advantage of the use of such an attachment means is that the handle dosing device will have a superior bending strength, e.g., when dosing, when the surfaces that form the handle member are attached to one another by means of an attachment means. Attachment means that lead to a reversible attachment have the advantage that after the dosing device is produced from the blank, this process can be reversed. Attachment means that lead to a reversible attachment have the advantage that once the dosing device is produced from the blank, the dosing device will stay a dosing device available for immediate use afterwards.

Hence, in one embodiment of the blank in accordance with present invention at least a part of the surfaces (7) and/or (8) contains an attachment means, so that after the surfaces (7) and (8) are brought into contact with one another during folding, the surfaces will stay attached to one another by means of the attachment means.

The attachment means may be, for example, a glue. For example, the glue is a nontoxic glue. Alternatively or additionally, the glue may be a glue that is derived from natural sources. For example, the glue may be based on casein, bee wax or fish glue.

After folding of the blank, the dosing device comprises a handle member and a container member. In accordance with an embodiment of the blank of the present invention after folding the dosing device comprises a container member defined by the surfaces (9), (10) and (11) and a handle member formed by the surfaces (7) and (8).

The dimensions of the surfaces that define the container member define the volume of the composition to be dosed with the dosing device. In one blank in accordance with the present invention the lengths of the shorter and the longer sides of the rectangular recyclable material, the length of the folding line (1) and the angles (α) are determined so that the volume of the resulting container member corresponds to a pre-determined amount of a composition to be dosed. The longer the folding line is relative to the length of the long side of the rectangular, the longer the resulting handle member will be compared to the resulting container member.

In one embodiment of the present invention, the angle (α) is smaller than 90°. For example, the angle (α) may be in the range of 60-80°, for example 65° to 75°. An angle (α) of these dimensions will allow on opening of the container member, which is neither too big nor too small for most compositions to be dosed. Increasing the dimensions of the angle (α) will reduce the size of the opening of the container member, whereas deceasing the dimensions of the angle (α) will increase the size of the opening of the container member. Depending on the intended use of the dosing member, an increased or a reduced opening of the container member may be beneficial.

One advantage of an embodiment of the present invention is that the upper edges of the container member form a plane with the three corners of the bottom plane of the inverted triangular pyramid that represents the volume of the container member. This has the consequence that after filling of the container member any excess composition to be dosed can be scraped off with any device with a straight edge, so that as a result the container member is precisely filled to the plane formed by the three corners of the bottom plane of the inverted triangular pyramid that represents the volume of the container member. No excess composition to be dosed will form a heap on the filled container member, allowing for precise dosing.

The blank of the present invention is made from recyclable material. For example, the blank of the present invention may be made from material that is recyclable with the paper stream. This has the advantage that - as paper recycling streams are widely available - such blanks and resulting dosing devices are not only recyclable but can also be easily recycled almost wherever paper recycling is available.

In a further embodiment of the present invention, the recyclable material is biodegradable and/or compostable. Biodegradable materials break down and decompose into natural elements. Consequently, biodegradation helps to reduce the buildup of waste. Compostable materials also break down and decompose into natural elements within a relatively short time after disposal and provide the earth with nutrients once the material has completely broken down. Typically, such materials can be added to compost sites with specific biological conditions.

To ensure that a product is as environmentally friendly as possible, the whole lifecycle of a product can be taken into account. As such, it is also beneficial if a product such as the blank of the present invention, and consequently, the resulting dosing device, is manufactured from sustainable resources. Hence, for example, the recyclable material is manufactured from sustainable resources.

In one embodiment of the present invention, the recyclable material is selected from the group consisting of paper, cardboard, or carton.

In order to ensure a good accuracy during the dosing process, the recyclable material needs to have a certain bending stiffness. The present inventors have found that if the bending stiffness is too low, the container member will lose its triangular pyramidal shape, and - as a consequence - the volume of the container member will slightly change. The present inventors have further found that if the bending stiffness is too high, the production of the dosing device from the blank by folding becomes difficult.

It is within the skill of the skilled artesian to select a recyclable material with a suitable bending stiffness. In general, the larger the dosing device is intended to be, the higher the ideal bending stiffness is. For example, the recyclable material may have a bending stiffness in the range of 10 to 80 mNm in machine direction (MD) and/or 5 to 40 mNm in cross direction (CD). The bending stiffness may be measured in accordance with ISO 5628. The inventors currently believe that this is suitable for typical applications, such as, e.g., for powdered food compositions with a dosing size in the range of 2-30 g.

The subject matter of the present invention comprises a dosing device obtainable by folding the blank in accordance with the present invention. It also comprises a dosing device obtained by folding the blank in accordance with the present invention.

Those skilled in the art will understand that all features and advantages described herein for the blank of the present invention also apply for the dosing device of the present invention. For example, the dosing device of the present invention is made from a single piece of material characterized in that the single piece of material is essentially rectangular, recyclable, and without incisions or notches. The dosing device of the present invention may comprise a container member and a handle member. For example, the container member may have a triangular pyramidal shape with a predefined volume. This pre-defined volume corresponds to a pre-determined amount of a composition to be dosed. The handle member may be held together by means of an attachment means. The dosing device may be made from biodegradable and/or compostable material. For example, the recyclable material may be selected from the group consisting of paper, cardboard, or carton, wherein, for example the recyclable material is manufactured from sustainable resources. Typically, the dosing device of the present invention may have a bending stiffness in the range of 10 to 80 mNm in MD and/or 5 to 40 mNm CD.

A further embodiment of the present invention relates to the use of the dosing device of the present invention for dosing a composition to be dosed. The present invention also relates to the use of a dosing device obtainable or obtained by folding the blank in accordance with the present invention.

The composition to be dosed may be any powdered or granulated composition to be dosed, for example. The composition to be dosed may also be a liquid composition for example. If the composition to be dosed is a liquid, it is preferred that the blank or at least the part of the blank that forms the container member is coated. This will have the advantage that it is avoided that the container member is wetted so that it eventually loses its shape.

For example, the composition to be dosed may be a powdered or granulated food composition. Such a powdered or granulated food composition may be selected from the group consisting of nutritional formulas; infant formulas; milk modifiers, such as, for example, cocoa-based beverage powders, cocoa malt-based beverage powders, fruit flavored beverage powders; plant-based beverages, spice mixtures, pet food, coffee, coffee mixes, plant-based milk alternative beverages.

Ideally, correct dosing is ensured by scraping off any excess composition to be dosed from the container member after filling. Hence, in one embodiment of the present invention the container member of the dosing device is filled with the composition to be dosed and a device with a straight edge is used to scrape off any excess material from the filled container member, so that the container member contains exactly the predetermined amount of the composition to be dosed.

Those skilled in the art will understand that they can freely combine all features of the present invention disclosed herein. In particular, features described for the blank of the present invention may be combined with the dosing device of the present invention or the use of the present invention and vice versa. Further, features described for different embodiments of the present invention may be combined.

Although the invention has been described by way of example, it should be appreciated that variations and modifications may be made without departing from the scope of the invention as defined in the claims.

Furthermore, where known equivalents exist to specific features, such equivalents are incorporated as if specifically referred in this specification. Further advantages and features of the present invention are apparent from the figures and non-limiting examples.

### Examples:

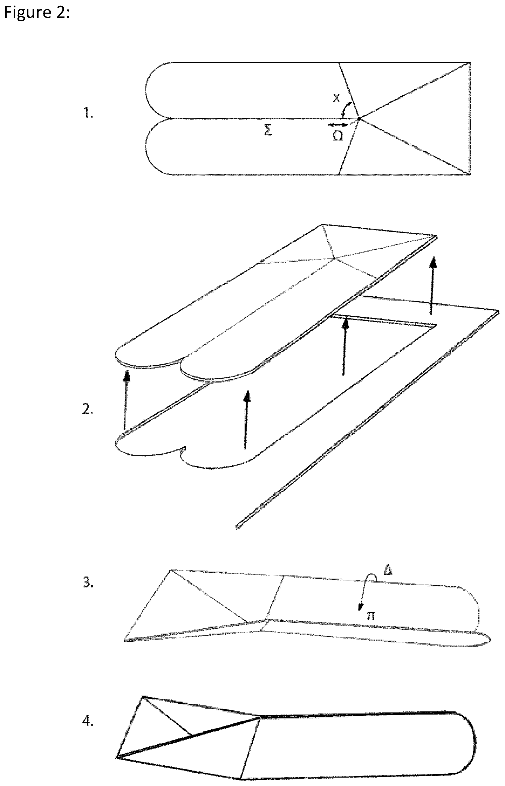

In the following, the inventors describe how a dosing device of the present invention can be manufactured effectively. The process is summarized in figure 2.

Based on the product volume the dosing device is supposed to measure and on the desired length of the handle member, the dimensions of the blank are determined.

Then, in a first step, a cutting/creasing tool as shown for step 1 in figure 2 is prepared. For example, the cutting/creasing tool may be prepared from aluminum. The cutting/creasing tool is able to pre-cease the line Σ, the anchor point Ω and the lines that will form the container member after folding.

In a second step- as shown in step 2 of figure 2 - the cutting/creasing tool is used to cut and crease a cardboard material to yield the blank of the present invention.

As shown in step 3 of figure 2 the blank of the present invention was then be folded, and the surfaces π and Δ were glued together, yielding the dosing device as shown in step 4 of figure 4.

## Claims

1. Blank for producing a dosing device by folding made from a single piece of material
**characterized in that**
the single piece of material is essentially rectangular, recyclable, and without incisions or notches, wherein the blank comprises
- a folding line (1) extending essentially from the middle of one shorter side of the rectangular recyclable material in parallel to the longer sides of the rectangular recyclable material to a star point (2) located in the middle between the longer sides of the rectangular recyclable material,
- two folding lines (3) and (4), each one extending from the star point (2) to one of two corners of the rectangular recyclable material that are closest to the star point (2) so that each one of the two corners is connected to the star point (2) by one of the folding lines (3) or (4), and
- two folding lines (5) and (6), each one extending from the star point (2) in an angle (α) to one of two longer sides of the rectangular recyclable material so that folding line (5) is extending to the longer side connected to the corner of the rectangular recyclable material that folding line (3) is connected to and folding line (6) is extending to the longer side connected to the corner of the rectangular recyclable material that folding line (4) is connected to and the angle (α) between the folding lines (1) and (5) or (1) and (6), respectively is smaller than the angle (β) between the folding lines (1) and (3) and (1) and (4), respectively.

2. Blank in accordance with claim 1, wherein the blank is to be folded by bringing the surfaces (7) and (8) into close proximity to each other, for example by bringing the surfaces (7) and (8) into contact with one another.

3. Blank in accordance with one of the preceding claims, wherein the folding occurs in a single operation.

4. Blank in accordance with one of the preceding claims, wherein at least a part of the surfaces (7) and/or (8) contains an attachment means, so that after the surfaces (7) and (8) are brought into contact with one another during folding, the surfaces will stay attached to one another by means of the attachment means, for example a glue.

5. Blank in accordance with claim 4, wherein attachment means are glue and the glue is based on casein, bee wax or fish glue.

6. Blank in accordance with one of the preceding claims, wherein after folding the dosing device comprises a container member defined by the surfaces (9), (10) and (11) and a handle member formed by the surfaces (7) and (8).

7. Blank in accordance with one of the preceding claims, wherein the lengths of the shorter and the longer sides of the rectangular recyclable material, the length of the folding line (1) and the angles (α) are determined so that the volume of the resulting container member corresponds to a pre-determined amount of a composition to be dosed.

8. Blank in accordance with one of the preceding claims, wherein the recyclable material is compostable.

9. Blank in accordance with one of the preceding claims, wherein the recyclable material is manufactured from sustainable resources.

10. Blank in accordance with one of the preceding claims, wherein the recyclable material is selected from the group consisting of paper, cardboard, or carton

11. Blank in accordance with one of the preceding claims, wherein the recyclable material has a bending stiffness in the range of 10 to 80 mNm in MD and /or 5 to 40 mNm in CD.

12. Dosing device obtainable by folding the blank in accordance with one of the preceding claims.

13. Use of a dosing device in accordance with claim 12 for dosing a composition to be dosed.

14. Use in accordance with claim 13, wherein the composition to be dosed is selected from the group of powdered or granulated compositions, for example food compositions.

15. Use in accordance with one of claims 13 or 14, wherein the container member of the dosing device is filled with the composition to be dosed and another device with a straight edge is used to scrape off any excess material from the filled container member, so that the container member contains exactly the predetermined amount of the composition to be dosed.

## Patentansprüche

1. Zuschnitt zum Produzieren einer Dosiervorrichtung durch Falten, hergestellt aus einem einzigen Materialstück,
**dadurch gekennzeichnet, dass**
das einzelne Materialstück im Prinzip rechteckig, wiederverwertbar und ohne Einschnitte oder Kerben ist, wobei der Zuschnitt umfasst
- eine Faltlinie (1), die sich im Wesentlichen von der Mitte einer kürzeren Seite des rechteckigen wiederverwertbaren Materials parallel zu den längeren Seiten des rechteckigen wiederverwertbaren Materials zu einem Sternpunkt (2) erstreckt, der sich in der Mitte zwischen den längeren Seiten des rechteckigen wiederverwertbaren Materials befindet,
- zwei Faltlinien (3) und (4), die sich jeweils von dem Sternpunkt (2) zu einer der zwei Ecken des rechteckigen wiederverwertbaren Materials erstrecken, die dem Sternpunkt (2) am nächsten liegen, sodass jede der zwei Ecken mit dem Sternpunkt (2) durch eine der Faltlinien (3) oder (4) verbunden ist, und
- zwei Faltlinien (5) und (6), die sich jeweils von dem Sternpunkt (2) in einem Winkel (α) zu einer der zwei längeren Seiten des rechteckigen wiederverwertbaren Materials erstrecken, sodass sich die Faltlinie (5) zu der längeren Seite erstreckt, die mit der Ecke des rechteckigen wiederverwertbaren Materials verbunden ist, mit der die Faltlinie (3) verbunden ist, und sich die Faltlinie (6) zu der längeren Seite erstreckt, die mit der Ecke des rechteckigen wiederverwertbaren Materials verbunden ist, mit der die Faltlinie (4) verbunden ist, und der Winkel (α) zwischen den Faltlinien (1) und (5) beziehungsweise (1) und (6) kleiner als der Winkel (β) zwischen den Faltlinien (1) und (3) beziehungsweise (1) und (4) ist.

2. Zuschnitt nach Anspruch 1, wobei der Zuschnitt zu falten ist, indem die Oberflächen (7) und (8) in enge Nähe zueinander gebracht werden, zum Beispiel indem die Oberflächen (7) und (8) in Kontakt miteinander gebracht werden.

3. Zuschnitt nach einem der vorstehenden Ansprüche, wobei das Falten in einem einzigen Arbeitsgang erfolgt.

4. Zuschnitt nach einem der vorstehenden Ansprüche, wobei mindestens ein Teil der Oberflächen (7) und/oder (8) ein Befestigungsmittel enthält, sodass nachdem die Oberflächen (7) und (8) während des Faltens miteinander in Kontakt gebracht wurden, die Oberflächen mittels des Befestigungsmittels, zum Beispiel eines Klebstoffs, aneinander befestigt bleiben.

5. Zuschnitt nach Anspruch 4, wobei die Befestigungsmittel Klebstoff sind und der Klebstoff auf Kasein, Bienenwachs oder Fischleim basiert.

6. Zuschnitt nach einem der vorstehenden Ansprüche, wobei die Dosiervorrichtung nach dem Falten ein Behälterelement, das durch die Oberflächen (9), (10) und (11) definiert ist, und ein Griffelement, das durch die Oberfläche (7) und (8) ausgebildet ist, umfasst.

7. Zuschnitt nach einem der vorstehenden Ansprüche, wobei die Längen der kürzeren und der längeren Seiten des rechteckigen wiederverwertbaren Materials, die Länge der Faltlinie (1) und die Winkel (α) bestimmt sind, sodass das Volumen des daraus resultierenden Behälterelements einer zuvor bestimmten Menge einer zu dosierenden Zusammensetzung entspricht.

8. Zuschnitt nach einem der vorstehenden Ansprüche, wobei das wiederverwertbare Material kompostierbar ist.

9. Zuschnitt nach einem der vorstehenden Ansprüche, wobei das wiederverwertbare Material aus nachwachsenden Rohstoffen gefertigt ist.

10. Zuschnitt nach einem der vorstehenden Ansprüche, wobei das wiederverwertbare Material ausgewählt ist aus der Gruppe bestehend aus Papier, Pappe oder Karton

11. Zuschnitt nach einem der vorstehenden Ansprüche, wobei das wiederverwertbare Material eine Biegesteifigkeit in dem Bereich von 10 bis 80 mNm in MD und/oder 5 bis 40 mNm in CD aufweist.

12. Dosiervorrichtung, erhältlich durch Falten des Zuschnitts nach einem der vorstehenden Ansprüche.

13. Verwendung einer Dosiervorrichtung nach Anspruch 12 zum Dosieren einer zu dosierenden Zusammensetzung.

14. Verwendung nach Anspruch 13, wobei die zu dosierende Zusammensetzung aus der Gruppe der pulverförmigen oder granulierten Zusammensetzungen, zum Beispiel Lebensmittelzusammensetzungen, ausgewählt ist.

15. Verwendung nach Anspruch 13 oder 14, wobei das Behälterelement der Dosiervorrichtung mit der zu dosierenden Zusammensetzung gefüllt wird und eine andere Vorrichtung mit einer geraden Kante verwendet wird, um beliebiges überschüssiges Material von dem gefüllten Behälterelement abzuschaben, sodass das Behälterelement genau die zuvor bestimmte Menge der zu dosierenden Zusammensetzung enthält.

## Revendications

1. Ébauche permettant la fabrication d'un dispositif de dosage par pliage réalisé à partir d'une pièce unique de matériau
**caractérisée en ce que**
la pièce unique de matériau est essentiellement rectangulaire, recyclable, et sans incision ou entaille, dans laquelle l'ébauche comprend
- une ligne de pliage (1) s'étendant essentiellement du milieu d'un côté plus petit du matériau recyclable rectangulaire parallèlement aux côtés plus grands du matériau recyclable rectangulaire jusqu'à un point étoile (2) situé au milieu entre les côtés plus grands du matériau recyclable rectangulaire,
- deux lignes de pliage (3) et (4), chacune s'étendant du point étoile (2) à l'un des deux coins du matériau recyclable rectangulaire qui sont les plus proches du point étoile (2) de sorte que chacun des deux coins est relié au point étoile (2) par l'une des lignes de pliage (3) ou (4), et
- deux lignes de pliage (5) et (6), chacune s'étendant du point étoile (2) selon un angle (α) à l'un des deux côtés plus grands du matériau recyclable rectangulaire de sorte que la ligne de pliage (5) s'étend au côté plus grand relié au coin du matériau recyclable rectangulaire auquel la ligne de pliage (3) est reliée et une ligne de pliage (6) s'étend au côté plus grand relié au coin du matériau recyclable rectangulaire auquel une ligne de pliage (4) est reliée et l'angle (α) entre les lignes de pliage (1) et (5) ou (1) et (6), respectivement, est inférieur à l'angle (β) entre les lignes de pliage (1) et (3) et (1) et (4), respectivement.

2. Ébauche selon la revendication 1, dans laquelle l'ébauche doit être pliée en rapprochant les surfaces (7) et (8) l'une de l'autre, par exemple, en mettant les surfaces (7) et (8) en contact l'une avec l'autre.

3. Ébauche selon l'une des revendications précédentes, dans laquelle le pliage s'effectue en une seule opération.

4. Ébauche selon l'une des revendications précédentes, dans laquelle au moins une partie des surfaces (7) et/ou (8) contient un moyen d'attache, de sorte qu'après que les surfaces (7) et (8) ont été mises en contact l'une avec l'autre pendant le pliage, les surfaces resteront attachées l'une à l'autre au moyen du moyen d'attache, par exemple une colle.

5. Ébauche selon la revendication 4, dans laquelle le moyen d'attache est de la colle et la colle est à base de caséine, de cire d'abeille ou de colle de poisson.

6. Ébauche selon l'une des revendications précédentes, dans laquelle, après pliage, le dispositif de dosage comprend un élément récipient défini par les surfaces (9), (10) et (11) et un élément poignée formé par les surfaces (7) et (8).

7. Ébauche selon l'une des revendications précédentes, dans laquelle les longueurs des petit et grand côtés du matériau recyclable rectangulaire, la longueur de la ligne de pliage (1) et les angles (α) sont déterminés de sorte que le volume de l'élément récipient résultant correspond à une quantité prédéterminée d'une composition à doser.

8. Ébauche selon l'une des revendications précédentes, dans laquelle le matériau recyclable est compostable.

9. Ébauche selon l'une des revendications précédentes, dans laquelle le matériau recyclable est fabriqué à partir de ressources durables.

10. Ébauche selon l'une des revendications précédentes, dans laquelle le matériau recyclable est choisi dans le groupe constitué du papier, du carton, ou de l'emballage en carton.

11. Ébauche selon selon l'une des revendications précédentes, dans laquelle le matériau recyclable a une rigidité de flexion dans la plage allant de 10 à 80 mNm en MD et/ou de 5 à 40 mNm en CD.

12. Dispositif de dosage pouvant être obtenu par pliage de l'ébauche selon l'une des revendications précédentes.

13. Utilisation d'un dispositif de dosage selon la revendication 12 pour doser une composition à doser.

14. Utilisation selon la revendication 13, dans laquelle la composition à doser est choisie dans le groupe de compositions en poudre ou en granulés, par exemple des compositions alimentaires.

15. Utilisation selon l'une des revendications 13 ou 14, dans laquelle l'élément récipient du dispositif de dosage est rempli avec la composition à doser et un autre dispositif avec un bord droit est utilisé pour racler un matériau excédentaire éventuel de l'élément récipient rempli, de sorte que l'élément récipient contient exactement la quantité prédéterminée de la composition à doser.
